# EUROPEAN PATENT APPLICATION

(11) **EP 0 987 627 A1**
(43) Date of publication of application: **22.03.2000**
(21) Application number: 98117504.5
(22) Date of filing: 15.09.1998
(51) Int. Cl.: G06F 9/445, G06F 9/44

(54) **Method and system for performing an update**

(71) Applicant: EASTMAN KODAK COMPANY, Rochester, New York 14650 (US)
(72) Inventor: Jooss, Frank c/o Kodak Aktiengesellschaft, 70323 Stuttgart (DE)
(74) Representative: Reichert, Werner F. Dr. Dipl.-Phys.

(57) **Abstract**

A method and a system for performing an update of a plurality of external stations (20₁, 20₂, 20₃, ...20ₙ) are disclosed. The system comprises a central (22) computer, which is connected by a communication link to at least one external station (20₁, 20₂, 20₃, ...20ₙ). A structured memory in the central computer (22) has a subdirectory (30₁, 30₂, 30₃, ...30ₙ) for each of the external stations (20₁, 20₂, 20₃, ...20ₙ). Each subdirectory (30₁, 30₂, 30₃, ...30ₙ) is further partitioned into at least one further subdirectory (31₁, 31₂, 31₃, ...31ₙ; 32₁, 32₂, 32₃, ...32ₙ; 33₁, 33₂, 33₃, ...33ₙ) for holding files to be updated. Each of the external stations (20₁, 20₂, 20₃, ...20ₙ) comprise a computer with a memory. The memory is structured for holding the same subdirectories (34₁, 34₂, 34₃, ...34ₙ; 35₁, 35₂, 35₃, ...35ₙ; 36₁, 36₂, 36₃, ...36ₙ) as implemented in the central computer (22).

## Description

### FIELD OF THE INVENTION

The invention relates to a method for performing an update. More particularly the method performs an update of a plurality of external stations.

Additionally, the invention relates to a system for performing an update. The system comprises a central computer, at least one external station, a communication link between said at least one external station and said central computer for transferring files from said central computer to at least one external station.

### BACKGROUND OF THE INVENTION

There are numerous suggestions in the art which are used to carry out an update of a remote electronic device. The files used for the update are located in the memory of a central computer or host. Documents disclosing related prior art listed below:

The document WO 98/21865 discloses an apparatus and a method for optimizing the use of long distance calls. A common telephone is connected to an additional device storing the rates of various telecommunication companies. In case a user places a certain long distance call the additional device retrieves the company which offers the best rate for the particular phone call. The additional device is connected to a central computer via the usual phone line. The computer regularly updates the additional device with respect to the rates and the time the best rates are offered. The data are stored in an internal memory of the device.

The document EP-A-0 836 138 provides a method, using a management information system, for installing and updating software on several computers. The management information system establishes a connection to the remote computers and checks if there is a need for an update or not. In case an update is necessary the management information system checks if the connection is suitable for the download and update of the software. If the result of the test is positive the management information system carries out the download and the update of the software on the remote computers. The connection between the management information system and the remote computers can be a local area network or a common telephone line.

A further method for updating computer software is disclosed in EP-A- 0 841 615. A computer has a memory which stores several software applications. Additionally, a file is present which indicates the actual software version installed in the memory. An update mechanism installed in the computer, accesses a central server in order to import updates form there. The update mechanism looks up the newest update version available on the central server. A file, also available on the central server, comprises further details necessary for carrying out the updates. This file controls the transfer of files from the central server to the computer such that only those files are transferred to the computer which do not conform with the newest version.

### SUMMARY OF THE INVENTION

The present invention provides a method for performing an update of a plurality of external stations. Especially, the external stations are order stations which are established at a retailer store location. An order station can be used by a customer to create a personal order which is later processed in a remote location. For example, a customer order processed at the remote location is the creation of prints out of a set of digital image data.

It is the object of the invention to provide a method which provides a simple, secure and inexpensive way to update each of the external stations.

The above object is accomplished by the steps of:
- writing at least one file, to be used for update into a subdirectory of a memory of a central computer, wherein for each external station a specific subdirectory is implemented;
- establishing connection with the central computer and the external stations;
- transferring the at least one update file to each of said external stations which are in communication with the central computer;
- checking the size of the at least one file transferred;
- storing the at least one file in a memory of each of the external stations which are in communication with the central computer;
- carrying out the update in each of the external stations which have properly received the transferred files for update; and
- writing an update report in the memory of each of said external stations.

It is a further object of the present invention to provide a system which enables a centrally controlled and monitored update of a plurality of external stations.

The above object is accomplished by a system characterized by:
- a structured memory in the central computer holding a subdirectory for each of the external stations, said subdirectory has at least one further subdirectory for holding files to be updated, and
- a computer in each of the external stations having a memory for holding the same said at least one further subdirectory for receiving said files to be updated.

The advantages of the inventive method and system are that the update of a plurality of order stations can be carried out without the need of service personnel to show up at each location of the plurality of external stations. Additionally, the update of the external stations will be effective in all active external service stations at the same time and date. This is especially important if the update effects a price change of a customer order or a part of the latter. The redundant subdirectory structure in the central computer and in each of the external stations opens up the possibility to monitor the update. Furthermore, it enables the update of external stations, which have not been "ON" or ready for the update at a specific time or date the update is preferably been carried out. Further advantages or embodiments of the invention become apparent form the dependent claims.

### BRIEF DESCRIPTION OF THE DRAWINGS

The subject matter of the invention is described with reference to the embodiment shown in the drawings.
Fig. 1 is a perspective view of an order station, which is an embodiment of an external station to be updated with the system of the present invention;
Fig. 2 is a schematic representation of the installation of the inventive system;
Fig. 3 displays a flow chart of the update process;
Fig. 4 displays a flow chart of the data update process;
Fig. 5 displays a flow; chart of the software update process; and
Fig. 6 displays a flow chart of the inifile update process.

### DETAILED DESCRIPTION OF THE INVENTION

The invention can be used to update any type of external station from a single central computer. The connection or communication link between the plurality of external stations and the central computer is established via a conventional telephone line or via internet. The software for establishing the connection and the connection data for each external station are stored in a memory of the central computer. Preferably the invention is applied to update data, software and files of an order station or a plurality of order stations which are in operation at different locations. The construction and the functionality of the order station is mentioned briefly in the following paragraph. A more detailed description is disclosed in the German Patent Applications DE-A-198 02 026.0 and DE-A-198 02 017.1.

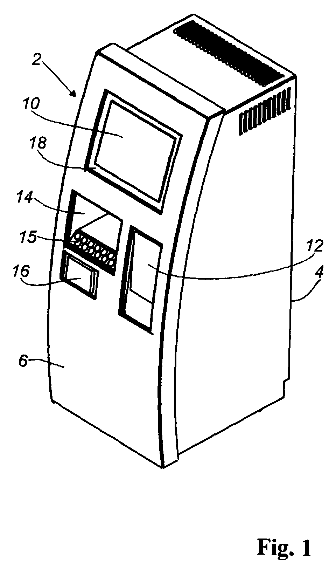

The order station 2, as disclosed in Fig. 1, comprises a housing 4 which is open at one side. Inside the housing 4 several devices are provided; for example a monitor 10, a computer 12, an optional storage compartment 14 for digital cameras to which several cable guides 15 are connected for cables for connecting digital cameras, and a document printer 16. The housing is closed off to the outside by a front panel 6, the latter having, in the area of the monitor, a glass sheet with touch recognition.

The placement of an order of ordering prints of digitized picture files at an order station 2 is as follows:
selecting on a starting interface one language that is used during the ordering process, touching an active field assigned to the required language on the glass sheet and the language is loaded from the computer 12 and displaying the language accordingly on the monitor 10;
selecting a carrier for the digitized picture files displayed by the computer 12 on an input medium interface on the monitor 10, displaying an index interface on the monitor 10 by the computer 12 after touching an active field assigned to said required carrier on the glass sheet 18;
selecting at least one picture to be included in the order out of the pictures displayed on said index interface, displaying a format selection interface on the monitor 10 by the computer 12 after touching an active field assigned to the required picture on the glass sheet;
selecting a format in said format selection interface by touching an active field assigned to a preset format on the glass sheet 18, and confirming the selection by touching a confirmation icon to which an active field has been assigned on the glass sheet 18, and displaying a number selection interface on the monitor 10 by the computer 12;
inputting the number of prints for the selected picture in said number selection interface by touching active fields assigned to a key field on the glass sheet, and confirming the input by touching a confirmation icon to which an active field has been assigned on the glass sheet 18, and displaying an order overview interface on the monitor 10 by the computer 12;
confirmation icon to which an active field has been assigned on the glass sheet 18, and thereby displaying an address input interface on the monitor 10 by the computer 12;
inputting the user data in said address input interface by touching active fields that are assigned to a key field on the glass sheet, and confirming the input by touching a confirmation icon to which an active field has been assigned on the glass sheet 18, and thereby displaying a confirmation interface on the monitor 10 by the computer 12; and
confirming the order in said confirmation interface by touching a confirmation icon to which an active field has been assigned on the glass sheet 18, and thereby printing a receipt by the computer 12 using the document printer and then transmitting the order to a central printing station via a data line.

The monitor 10 of the order station 2 displays information, which is placed in separate windows or fields. Some of the information fields may be overlaid by a touch recognition to allow a user to place a customized order and to guide him through the complete ordering process. There is a certain need to provide the possibility to easily update or alter the information, the data, the fields itself or the software.

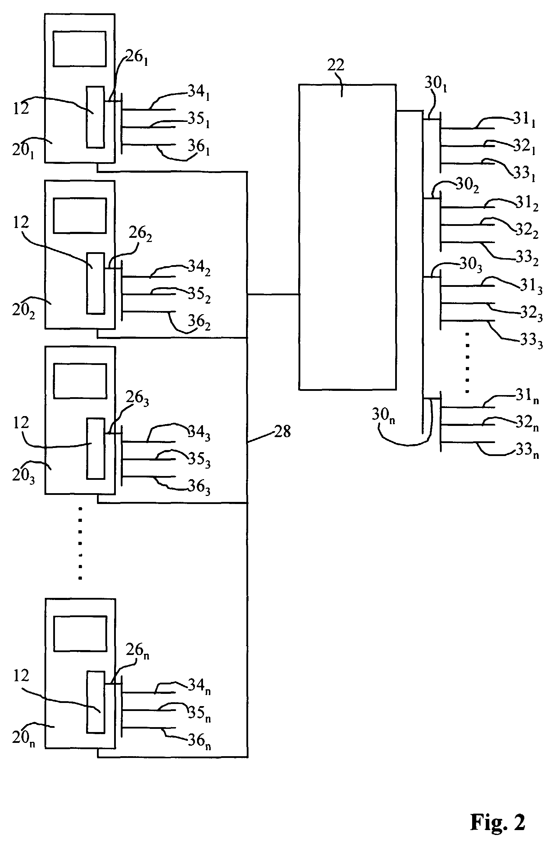

Fig. 2 shows schematically a setup of a system for updating the at least one order station 20₁, 20₂, 20₃, ...20ₙ. The description of the update of at least one order station 20₁, 20₂, 20₃, ...20ₙ is not regarded as a limitation, since a person skilled in the art would apply the teaching to other external stations which perform different functions as the specific order station. The automatic update is monitored by a central computer 22. The central computer 22 is connected via a conventional telephone line 28 to each of the order stations 20₁, 20₂, 20₃, ...20_{n.} The central computer 22 has a structured memory (not shown). For each order station 20₁, 20₂, 20₃, ...20ₙ a subdirectory 30₁, 30₂, 30₃, ...30ₙ is provided which stores the data or the files needed for update of each of the order stations 20₁, 20₂, 20₃, ...20ₙ. Each of the subdirectories 30₁, 30₂, 30₃, ...30ₙ is partitioned into at least a first 31₁, 31₂, 31₃, ...31ₙ, a second 32₁, 32₂, 32₃, ...32ₙ and a third 33₁, 33₂, 33₃, ...33ₙ subdirectory. The first subdirectory 31₁, 31₂, 31₃, ...31ₙ is used to store information about the customer orders which have been carried out at the respective order station. The second subdirectory 32₁, 32₂, 32₃, ...32ₙ is used to store information which provides the retailer or the service provider with statistic data. The data of interest are: how long does it take for a customer to place an order, what data sources are used, how often the order station 20₁, 20_{2,} 20₃, ...20ₙ was used aid no order has been sent off, etc. The third subdirectory 33₁, 33₂, 33₃, ...33ₙ stores all the files and data used to carry out an update of the order stations 20₁, 20₂, 20₃, ...20ₙ. The same subdirectory structure as for each order station 20₁, 20₂, 20₃, ...20ₙ on the central computer 22 is present in the memory of each computer 12 of each order station 20₁, 20₂, 20₃, ...20ₙ. As mentioned above with respect to the central computer 22 a subdirectory 26₁, 26₂, 26₃, ...26ₙ of each order station 20₁, 20₂, 20₃, ...20ₙ is partitioned into at least a first 34₁, 34₂, 34₃, ...34ₙ, a second 35₁, 35₂, 35₃, ....35ₙ and a third 36₁, 36₂, 36₃, ...36ₙ subdirectory. The content of the subdirectories implemented in each order station 20₁, 20₂, 20₃, ...20ₙ is the same as the content of the subdirectories 30₁, 30₂, 30₃, ...30ₙ in the memory of the central computer 22.

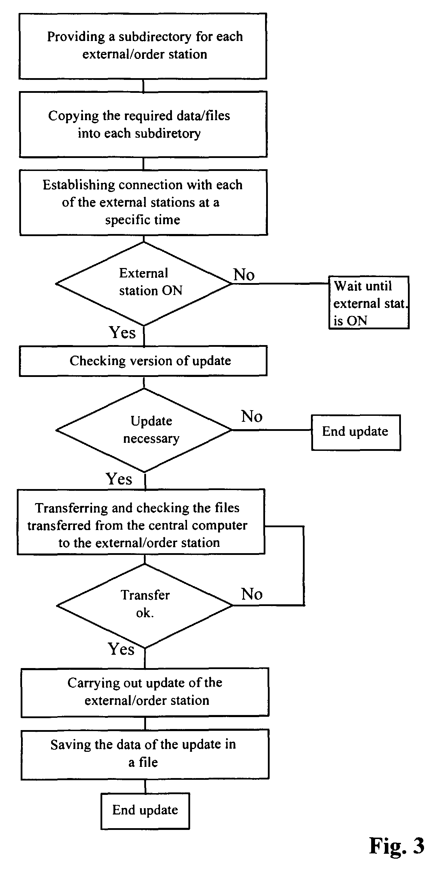

The update process of the external station 20₁, 20₂, 20₃, ...20ₙ is described in Fig. 3. As mentioned above, the following description uses the example of the order station 20₁, 20₂, 20₃, ...20ₙ (see Fig. 1) to make the update process more clear to the reader. Prior update of each order station 20₁, 20₂, 20₃, ...20ₙ the subdirectory 30₁, 30₂, 30₃, ...30ₙ for each order station 20₁, 20₂, 20₃, ...20ₙ has to be provided in the memory of the central computer 22. The data or files required for the update of each individual order station 20₁, 20₁, 20₂, 20₃, ...20ₙ stored in each subdirectory 30₁, 30₂, 30₃, ...30ₙ at the appropriate place. As mentioned above the files and data for the update are stored in the third subdirectory 33₁, 33₂, 33₃, ...33ₙ of the central computer 22. It is preferred to carry out the update of the order stations 20₁, 20₂, 20₃, ...20ₙ at a time at which it is unlikely that the order station 20₁, 20₂, 20₃, ...20ₙ is busy. A possible time for carrying out the update would be 4:00 a.m. This assumes that the order station 20₁, 20₂, 20₃, ...20ₙ is still ON. At the time mentioned above the central computer 22 tries to establish the connection with each of the order stations 20₂, 20₃, ...20ₙ. via a conventional telephone line 28 or internet. The connection is successful established with those order stations 20₂, 20₃, ...20ₙ which are ON. A connection between the central computer 22 and those order stations, which were not ON at the specific time the connection to the central computer was established, is generated as soon as the order station is switched ON.

For the following description we assume that the order station 20₁, 20₂, 20₃, ...20ₙ is ON and the connection with the central computer 22 is successfully established. Prior to the transfer of the files from the central computer 22 to each of the individual order stations 20₁, 20₂, 20₃, ...20ₙ, a check is made by each order station if an update is necessary. The update process of the order station 20₁, 20₂, 20₃, ...20ₙ is stopped if the software or file version is the same as the update version provided by the central computer 22. In case an update is due, a copy of the files necessary for the update is transferred from each third subdirectory 33₁, 33₂, 33₃, ...33ₙ of the central computer 22 to the related third subdirectory 36₁, 36₂, 36₃ ...36ₙ of the specific order station 20₁, 20₂, 20₃, ...20ₙ. The files are stored in memory of each order station 20₁, 20₂, 20₃, ...20ₙ having the same subdirectory structure as in the central computer 22. The files transferred from the central computer 22 are checked with respect to file size in order to detect any wrong transmission or wrong data. In case any difference in file size is detected, the transfer of the file to the specific order station 20₁, 20₂, 20₃, ...20ₙ has to be repeated.

After the successful transfer of the file, the update process is carried out and the data representing the date, the software version, etc. are stored in a file in the memory of each order station 20₁, 20₂, 20₃, ...20_{n.} Additionally, each order station 20₁, 20₂, 20₃, ...20ₙ sends a response to the central computer 22. The response is attached to a file in the memory of the central computer 22. The file is sent to and stored in each third subdirectory 33₁, 33₂, 33₃, ...33ₙ of the central computer 22 related to each order station 20₁, 20₂, 20₃, ...20ₙ.

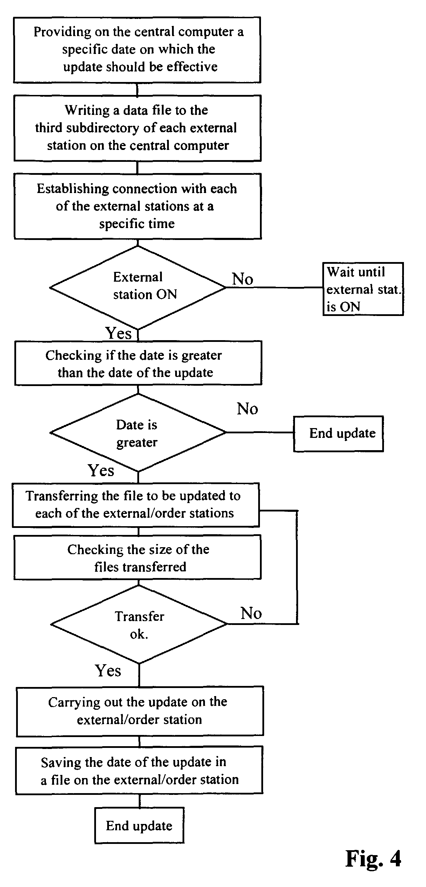

Three different updates are carried out simultaneously or one by one on each of the order stations 20₁, 20₂, 20₃, ...20ₙ. The first update is a "DATA" update (see Fig. 4) which is carried out on a specific date. This update is substantially used to update the prices or the formats of the prints, which are sent off by a user of an order station 20₁, 20₂, 20₃, ...20ₙ The central computer 22 holds in the third subdirectory 33₁, 33₂, 33₃, ...33ₙ a file, for example named "dataupdate.ini", which is structured as follows:

### [DATA]

Date = 〈the date for carrying out the update〉 For example: 20.12.1998
Filename = 〈filename of the file to be replaced〉 For example: Date.ini
Checksum = 〈size of the file to be replaced in Bytes〉

As mentioned above, "Date" is the date on which the change or the update should be effective. The date has to be written in the form "dd.mm.yyyy", wherein "dd" stands for the day, "mm" for the month and "yyyy" for the current year. The file to be replaced, here "Date.ini" has to be in the memo-y of the central computer 22 in the third subdirectory 33₁, 33₂, 33₃, ...33ₙ for each order station 20₁, 20₂, 20₃, ...20ₙ. The file has to be present in the specific third subdirectory 33₁, 33₂, 33₃, ...33ₙ until the update is effective in the specific order station 20₁, 20₂, 20₃, ...20_{n.} "Checksum" represents the number of Bytes of the file, transferred from the central computer 22 to the order station 20₁, 20₂, 20₃, ...20ₙ. It is checked if the size of the file stored in the central computer 22 differs from the file transferred to the order station 20₁, 20₁, 20₃, ...20ₙ. In case of any difference, the transfer has to be carried out once more. In case an order station 20₁, 20₂, 20₃, ....20ₙ is not ON at the specific date, the update has to be carried out as soon as the order station 20₁, 20₂, 20₃, ...20ₙ is ON. A comparison is made if the present date is greater than the date of the update. If it is true, the update is carried out even after the due date of the update.

Additionally, there is a possibility that an order station 20₁, 20₂, 20₃, ...20ₙ is switched ON and OFF several times a day. In order to avoid the same update more than one time, the order station 20₁, 20₂, 20₃, ...20ₙ stores after a successful update the date in a file, for example, "updateVersion.ini". Prior to the start of an update, a comparison is made between the date stored in "update.ini" in the third subdirectory 33₁, 33₂, 33₃, ...33ₙ of the specific order station on the central computer 22 and the date stored in "updateVersion.ini" in the respective subdirectory 36₁, 36₂, 36₃, ...36ₙ on the order station 20₁, 20₂, 20₃, ...20ₙ. If a match of the dates stored is detected, no update needs to be done since the update has already been carried out.

This update does not request a restart of the order station 20₁, 20₂, 20₃, ...20ₙ. Therefore, all files may be substituted which are not constantly used. Files with the extension ".DLL" or ".EXE" cannot be updated with this type of update. This update procedure is suitable for files, which are opened and used several times during runtime of the order station 20₁, 20₂, 20₃, ...20ₙ.

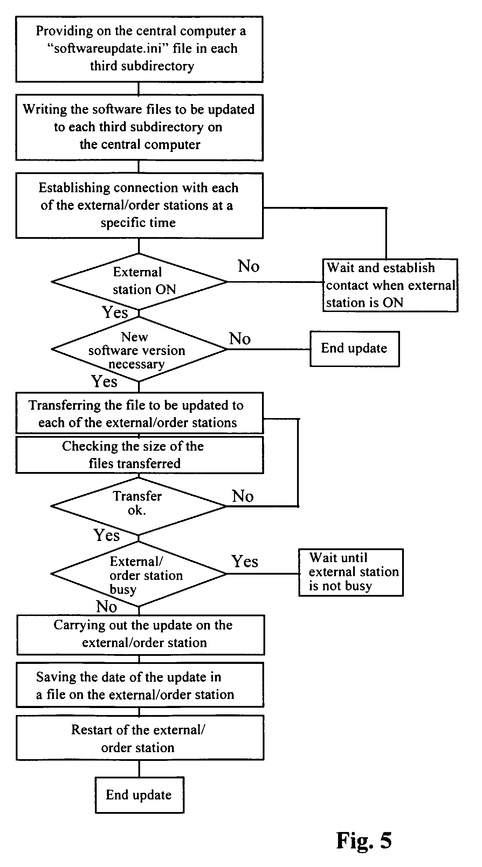

The second update is a "SOFTWARE" update (see Fig. 5) which is carried out if there is a difference in the software versions used on the order stations 20₁, 20₂, 20₃, ...20ₙ, and a new version stored in each specific third subdirectory 33₁, 33₂, 33₃, ...33ₙ of the central computer 22. The central computer 22 holds in the third subdirectory a file, for example, named "softwareupdate.ini", which is structured as follows:

### [SOFTWARE]

Version = 〈Version of the update〉
File1 = 〈filename of the first file to be replaced〉
File2 = 〈filename of the second file to be replaced 〉
File3 = 〈filename of the third file to be replaced 〉
Checksum = 〈size in Bytes of all files to be replaced

Data about the version of the update is necessary to identify and select the correct update. The version number is represented by a string of characters and stored, for example, in the file "updateVersion.ini", in the third subdirectory 36₁, 36₂, 36₃, ...36ₙ of each order station 20₁, 20₂, 20₃, ...20ₙ.

At 4:00 a.m. or during switch "ON" of the order station 20₁, 20₂, 20₃, ...20ₙ the file "update.ini" is read from the third subdirectory 33₁, 33₂, 33₃, ...33ₙ of the central computer 22 and the version number is compared with the version number stored in the file "updateVersion.ini" in the third subdirectory 36₁, 36₂, 36₃, ...36ₙ, of each order station 20₁, 20₂, 20₃, ...20ₙ. If an update is required, the files present in the third subdirectory 33₁, 33₂, 33₃, ...33ₙ of the central computer 22 are transferred to and copied into the corresponding third subdirectory 36₁, 36₂, 36₃, ...36ₙ, of the order station 20₁, 20₂, 20₃, ...20ₙ. Additionally, each order station 20₁, 20₂, 20₃, ...20ₙ and the central computer 22 carry out a check to determine a difference between the file size on the central computer 22 and the file size received by each order station 20₁, 20₂, 20₃, ...20ₙ. In case any mismatch is detected the transfer of the file or files is repeated. Then a check is made to detect if the order station is currently processing an order or is busy. The order station marks in a file "Messages.ini" the status of order station, wherein the "busy status" is marked with 0 and the "ready status" is marked with 1. If the order station is busy, the carrying out of the update is delayed one minute. After one minute the status of the order station is checked again. As soon as the order station has reached the "ready" status, the operation program "ROS.EXE" of the order station is stopped (please note the program responsible for the transfer,"Transfer.exe", of files between the central computer 22 and the order station 20₁, 20₂, 20₃, ...20ₙ is not terminated). The files, which are present in the third specific subdirectory 33_{1,} 33₂, 33₃, ...33ₙ of the central computer 22, are copied to the third subdirectory 36₁, 36₂, 36₃, ...36ₙ of the order station and the operation program "ROS.EXE" is restarted.

The restart of "ROS.EXE" causes an automatic restart of"Transfer.exe". Therefore, "Transfer.exe" has to be terminated prior to the restart of the entire system. Additionally, the file "updateVersion.ini" has to be written which contains the number of the newest software version installed on each order station 20₁, 20₂, 20₃, ...20ₙ.

Since Windwos95™ does not allow the replacement of a file as long as it is in use, "Transfer.exe" cannot be updated the way as described above. "Transfer.exe" cannot be copied form the third subdirectory 33_{1,} 33₂, 33₃, ...33ₙ of the central computer 22 to the third subdirectory 36₁, 36₂, 36₃, ...36ₙ of the order station 20_{1,}, 20₂, 20₃, ...20ₙ. The copy process of "Transfer.exe" is done by "ROS.EXE". Prior to the start of "Transfer.exe", initiated by the start of "ROS.EXE", it is checked if "transfer.exe" is in the third subdirectory 33₁, 33₂, 33₃, ...33ₙ of the central computer 22. If this is true, the system controls the activity of"Transfer.exe" several times, until a termination of the program "Transfer.exe" is detected. Upon this result the new version of the file "Transfer.exe" is copied into the memory and restarted.

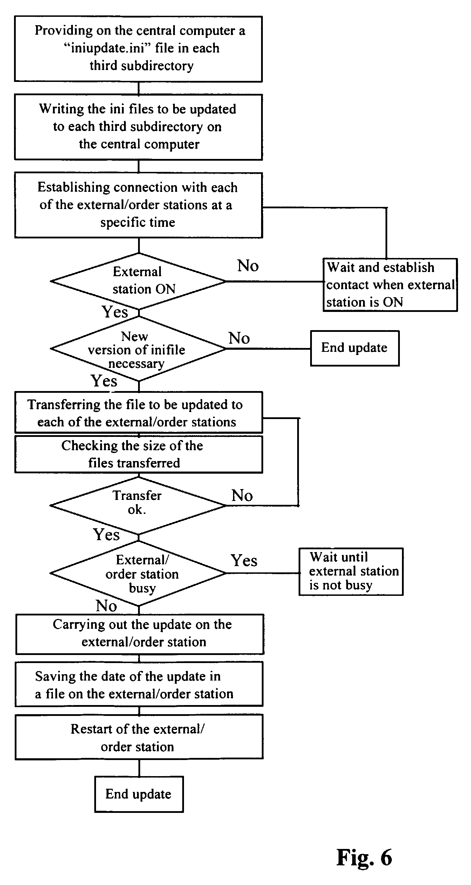

The third update is a "ROS" update (see Fig. 6), which is carried out if there is a need to change the entries in specific inifiles effective in each order station 20₁, 20₂, 20₃, ...20ₙ. To change the entries a file "iniupdate.ini" is used, which the central computer 22 holds in the third subdirectory 33₁, 33₂, 33₃, ...33ₙ.The structure of the file is as follows:

### [VERSION]

- Version = 〈Version of the update〉: The number of the version can be similar or different to the number of the version used for updating the software of the order stations.

### [INI]

### Filename = 〈name of the inifile in which the changes have to be made〉

- Section1 = 〈first section ([ ]) of the inifile〉: For example: SECTION1
- Key1 = 〈first key〉: For example: KEY1
- String1 = 〈text to be replaced〉: For example: STRING1
- Secction2〈second section ([ ]) of the inifile〉: For example: SECTION 2
- Key2 = 〈second key〉: For example: KEY2
- String2 = 〈text to be replaced〉: For example: STRING2

Additionally, information about the version of the update is necessary to identify and select the correct update. The version number is represented by a string of characters and stored for example in the file "updateVersion.ini" in the third subdirectory 36₁, 36₂, 36₃, ...36n of each order station 20₁, 20₂, 20₃, ...20ₙ.

At 4:00 a.m. or during switch "ON" of the order station, the file "update.ini" is read from the third subdirectory 33₁, 33₂, 33₃, ...33ₙ of the central computer 22 and the version number is compared with the version number stored in the file "updateVersion.ini" in the third subdirectory 36₁, 36₂, 36₃, ...36ₙ, of each order station 20₁, 20₂, 20₃, ...20ₙ. If an update is required, the files present in the third subdirectory 33₁, 33₂, 33₃, ...33ₙ of the central computer 22 are transferred to and copied into the corresponding third subdirectory 36₁, 36₂, 36₃, ...36ₙ of the order station 20₁, 20₂, 20₃, ...20ₙ. Additionally, each order station 20₁, 20₂, 20₃, ...20ₙ and the central computer 22 carry out a check to determine a difference between the file size on the central computer 22 and the file size received by each order station 20₁, 20₂, 20₃, ...20ₙ. In case any mismatch is detected the transfer of the file or files is repeated. A check is made to detect if the order station 20₁, 20₂, 20₃, ...20ₙ is currently processing an order or is busy. The order station 20₁, 20₂, 20₃, ...20ₙ marks in a file "Messages.ini" the status of order station, wherein the "busy status" is marked with 0 and the "ready status" is marked with 1. If the order station 20₁, 20₂, 20₃, ...20ₙ is busy, the carrying out of the update is delayed one minute. After one minute the status of the order station 20₁, 20₂, 20₃, ...20ₙ is checked again. As soon as the order station has reached the "ready" status the operation program "ROS.EXE" of the order station is stopped. The files, which are present in the third specific subdirectory 33₁, 33₂, 33₃, ...33ₙ of the central computer 22, are copied to the third subdirectory 36₁, 36₂, 36₃, ...36ₙ of the order station and the operation program "ROS.EXE" is restarted. The restart of the program "ROS.EXE" makes the amendment in the inifiles effective.

The file "updateVersion.ini" has to be written which contains the date of the newest update of the inifiles installed on each order station 20₁, 20₂, 20₃, ...20_{n.}

During every update, regardless of the type of the update, an additional program "PIROSupdate.exe" present on the central computer 22, protocols for each order station 20₁, 20₂, 20₃, ...20ₙ all the actions which have been carried out while the update was in progress. The data are stored in a file "StationXXXXXX.txt". The X'es represent the individual number of each order station 20₁, 20₂, 20₃, ...20ₙ placed at a retail store location. Every new entry is attached to the end of the file. A block of data may look as follows:

### ** Data Update **

Date = 〈Date when Data Update has been carried out〉
Filename = 〈Name of the file to be replaced〉

### ** Software Update **

Version = 〈Version Number of Software Update〉
Filename1 = 〈First file to be replaced〉
Filename2 = 〈Second file to be replaced〉

### ** INI Update **

Version = 〈Version Number of INI Update〉
Inifilename = 〈file name of the Inifile〉
Section1 = 〈Section1 to be amended〉
Key1 = 〈Key1 to be amended〉
String1 = 〈Text to be replaced〉

A file "UpdateProtocol.txt" is located in the third subdirectory of the memory of the central computer 22. After every update a report is attached to the end of this file. The data have for example the following form:

### [DATA UPDATE]

date = 〈Date of Data Update〉

### [SOFTWARE UPDATE]

Version = 〈Version Number of Software Update〉

### [INI UPDATE]

Version = 〈Version Number of INI Update〉

### [UPDATE STATUS]

Date = 〈implementation date〉
Time = 〈time of implementation〉
Status ="Update successful"

The data above show the type of update (written in brackets) and the number of the actual version or the date. It is clear from the description of the update process that it is not necessary to carry out all three types of updates at the same time. In case the update was successful, the above last four lines are attached to the end of the file. Date represents the date on which the update has been carried out. Time represents the time on which the update has been carried out. The last line finally shows that the update was successful. No update was successfully carried out if the last line of the above file is not present.

The invention has been described in detail with particular reference to certain preferred embodiments thereof, but it will be understood that variations and modifications can be effected within the scope of the invention.

## Claims

1. A method for performing an update of a plurality of external stations 20₁, 20₂, 20₃, ...20ₙ) characterized by the steps of:
• writing at least one file, to be used for update into a subdirectory of a memory of a central computer (22) wherein for each external station (20₁, 20₂, 20₃, ...20ₙ) a specific subdirectory (30₁, 30₂, 30₃, ...30ₙ) is implemented;
• establishing connection with the central computer (22) and the external stations (20₁, 20₂, 20₃, ...20ₙ);
• transferring the at least one update file to each of said external stations (20₁, 20₂, 20₃, ...20ₙ) which are in communication with the central computer (22);
• checking the size of the at least one file transferred;
• storing the at least one file in a memory of each of the external stations (20₁, 20₂, 20₃, ...20ₙ) which are in communication with the central computer (22)
• carrying out the update in each of the external stations (20₁, 20₂, 20₃, ...20ₙ) which have properly received the transferred files for update; and
• writing an update report in the memory of each of said external stations (20₁, 20₂, 20₃, ...20ₙ).

2. The method as claimed in claim 1 wherein the at least one transferred file is a file for updating data on said external stations (20₁, 20₂, 20₃, ...20ₙ).

3. The method as claimed in claim 1 wherein the at least one transferred file is a file for updating software on said external stations (20₁, 20₂, 20₃, ...20ₙ).

4. The method as claimed in claim 1 wherein the at least one transferred file is a file for updating an inifile on said external stations (20₁, 20₂, 20₃, ...20ₙ).

5. The method as claimed in claim 2 comprises the additional steps of:
• establishing connection with the central computer (22) and the external stations (20_{n,} 20₂, 20₃, ...20ₙ) at a specific time and on a specific date;
• comparing the present date with the date of the update and transferring upon comparison the file be updated to each of the external stations (20₁, 20₂, 20₃, ...20ₙ); and
• storing the date of the update in a file on the external station (20₁, 20₂, 20₃, ...20ₙ).

6. The method as claimed in claim 3 comprises the additional steps of:
• establishing connection with the central computer (22) and the external stations (20₁, 20₂, 20₃, ...20ₙ) at a specific time;
• comparing the present version of files to be updated with the version of the update and transferring upon comparison the files to be updated to each of the external stations 20₁, 20₂, 20₃, ...20ₙ);
• storing the date of the update in a file on the external station; and
• restarting the external station (20₁, 20₂, 20₃, ...20ₙ).

7. The method as claimed in claim 4 comprises the additional steps of:
• establishing connection with the central computer (22) and the external stations (20₁, 20₂, 20₃, ...20ₙ) at a specific time;
• comparing the present version of the inifiles be updated with the version of the inifiles presented for update and transferring upon comparison the inifiles to be updated to each of the external stations (20₁, 20₂, 20₃, ...20ₙ);
• storing the date of the update in a file on the external station (20₁, 20₂, 20₃, ...20ₙ); and
• restarting the external station (20₁, 20₂, 20₃, ...20ₙ).

8. The method as claimed in claim 1, 5, 6 or 7 wherein the step of establishing connection with those external stations (20₁, 20₂, 20₃, ...20ₙ) is deferred until the external stations (20₁, 20₂, 20₃, ...20ₙ) are ON.

9. The method as claimed in claim 1, 5, 6 or 7 wherein the step of transferring the file to be updated form the central computer (22) to the external station (20₁, 20₂, 20₃, ...20ₙ) is carried out again if there is any mismatch in file size detected.

10. The method as claimed in claim 6 or 7 wherein the step of carrying out the update on those external stations (20₁, 20₂, 20₃, ...20ₙ) is deferred until the external stations (20₁, 20₂, 20₃, ...20ₙ) have left the busy state.

11. A system for performing an update comprises a central (22) computer, at least one external station (20₁, 20₂, 20₃, ...20ₙ), a communication link between said at least one external station (20₁, 20₂, 20₃, ...20ₙ) and said central computer (22) for transferring files from said central computer (22) to said at least one external station (20₁, 20₂, 20₃, ...20ₙ); the system is characterized by:
• a structured memory in the central computer (22) holding a subdirectory (30₁, 30₂, 30₃, ...30ₙ) for each of the external stations (20₁, 20₂, 20₃, ...20ₙ) said subdirectory (30₁, 30₂, 30₃, ...30ₙ) has at least one further subdirectory (31₁, 31₂, 31₃, ... 31ₙ;32₁, 32₂, 32₃, ...32ₙ; 33₁, 33₂, 33₃, ...33ₙ) for holding files to be updated, and
• a computer in each of the external stations (20₁, 20₂, 20₃, ...20ₙ) having a memory for holding the same said at least one further subdirectory (34₁, 34₂, 34₃, ...34ₙ; 35₁, 35₂, 35₃, ...35ₙ; 36₁, 36₂, 36₃, ...36ₙ) for receiving said files to be updated.

12. The system as claimed in claim 11 wherein the update files comprise a first file type for enabling a data update in the external station (20₁, 20₂, 20₃, ...20ₙ), a second file type for enabling a software update in the external station (20₁, 20₂, 20₃, ...20ₙ) and a third file type for enabling an update of inifiles in the external station (20₁, 20₂, 20₃, ...20ₙ).

13. The system as claimed in claim 11 wherein the communication link between the central computer (22) and the at least one external station (20₁, 20₂, 20₃, ...20ₙ) is established via a conventional telephone line and the internet.

14. The system as claimed in claim 11 wherein three subdirectories are established on the central computer (22) for each external station (20₁, 20₂, 20₃, ...20ₙ) and the same three subdirectories are established in each of the external stations (20₁, 20₂, 20₃, ...20ₙ).

15. The system as claimed in claim 14 wherein a first subdirectory on the central computer (22) and on the external station (20₁, 20₂, 20₃, ...20ₙ holds data about customer orders placed on the external station (20₁, 20₂, 20₃, ...20ₙ).

16. The system as claimed in claim 14 wherein a second subdirectory on the central computer (22) and on the external station (20₁, 20₂, 20₃, ...20ₙ) holds data about order process of customer orders placed on the external station (20₁, 20₂, 20₃, ...20ₙ).

17. The system as claimed in claim 14 wherein a third subdirectory on the central computer (22) and on the external station (20₁, 20₂, 20₃, ...20ₙ) holds files and data, which are used to carry out the update of the external station (20₁, 20₂, 20₃, ...20ₙ).

18. The system as claimed in any of the claims 10 to 17 wherein the external station (20₁, 20₂, 20₃, ...20ₙ) is an order station for ordering prints of digital photographic data gained from various sources.
